Europäisches Patentamt

European Patent Office

Office européen des brevets

(19)

(11) Veröffentlichungsnummer: **0 119 429 B2**

(12) # NEUE EUROPÄISCHE PATENTSCHRIFT

(45) Veröffentlichungstag der neuen Patentschrift:
12.06.91 Patentblatt 91/24

(51) Int. Cl.⁵ : **C03B 37/06, C03B 37/08**

(21) Anmeldenummer: 84101206.5

(22) Anmeldetag: 07.02.84

(54) Verfahren und Vorrichtung zur Zerteilung von Schmelzen.

(30) Priorität: 19.02.83 DE 3305809

(43) Veröffentlichungstag der Anmeldung:
26.09.84 Patentblatt 84/39

(45) Bekanntmachung des Hinweises auf die
Patenterteilung:
30.12.86 Patentblatt 86/52

(45) Bekanntmachung des Hinweises auf die
Entscheidung über den Einspruch:
12.06.91 Patentblatt 91/24

(84) Benannte Vertragsstaaten:
AT BE CH DE FR GB IT LI NL SE

(56) Entgegenhaltungen:
CH-A- 219 086
DE-A- 3 016 114

(56) Entgegenhaltungen:
DE-B- 1 067 572
DE-B- 2 205 507
DE-C- 1 131 853
GB-A- 724 314
GB-A- 928 865
US-A- 4 316 731
Vetrotex Textilglas Report 1) 1983, Seite 8

(73) Patentinhaber: BAYER AG
W-5090 Leverkusen 1 Bayerwerk (DE)

(72) Erfinder: Muschelknautz, Edgar, Prof. Dr.
Carl-Rumpff-Strasse 33
W-5090 Leverkusen 1 (DE)
Erfinder: Rink, Norbert, Dr.
Frixheimerstrasse 60
W-4049 Rommerskirchen 1 (DE)
Erfinder: Chalupka, Georg
Carl-Leverkus-Strasse 1 a
W-5068 Odenthal (DE)

## Beschreibung

Die vorliegende Erfindung betrifft eine neue Ziehdüse zur Zerteilung von Schmelzen nach dem Düsenblasverfahren sowie ein Verfahren zur Zerteilung von Schmelzen unter Einsatz der Ziehdüse. Eine Ziehdüse zur Herstellung von Glas- oder Steinwolle nach dem Düsenblasverfahren ist z.B. in DE-B-1 067 572 beschrieben. Zur Erzeugung eines Schmelzestromes mit einem Durchmesser von etwa 8 bis 10 mm muß der Eingangsquerschnitt der Ziehdüse innerhalb eines bestimmten Bereichs liegen. Außerdem ist vorgesehen, daß der zerfasernde Schmelzestrom in der Ziehdüse von einem Dampfmantel umhüllt wird. Dieses Verfahren hat sich jedoch nicht zur Herstellung von dünnen Mineralfasern bewährt.

Das Düsenblasverfahren ist ein sehr altes Zerfaserungsverfahren für Mineralschmelzen. Es zeichnet sich insbesondere durch seine Einfachheit aus, da es keine mechanisch bewegten Teile, die in Berührung mit der heissen Mineralschmelze kommen, aufweist. Dennoch konnte sich das Düsenblasverfahren gegenüber zweistufigen Verfahren nicht durchsetzen, da die damit erhaltenen Fasern eine unzureichende Länge und eine unbefriedigende Faserdickenverteilung bei relativ großer mittlerer Faserdicke aufwiesen. Zur Erzielung längerer Fasern haben sich daher Verfahren mit einer ersten mechanischen Faserbildungsstufe durch Zentrifugalkräfte (Schleuderrad- oder Schleuderkorb-Verfahren) mit anschließender aerodynamischer Ausziehstufe durchgesetzt.

Zur Herstellung dünner Fasern unter 5 μ Durchmesser werden industriell zweistufige aerodynamische Verfahren angewandt, wobei die erste Stufe aus einem Düsenblasverfahren und die zweite Stufe aus einem Blasverfahren (Jet-Blast) besteht.

Erst die in der europäischen Patentanmeldung EP-A1-38 989 mitgeteilte Erkenntnis, daß durch gezielte Gestaltung der Ziehdüse beim Düsenblasverfahren eine zweistufige Faserbildung durchgeführt werden kann, führte zur Entwicklung eines wettbewerbsfähigen Düsenblasverfahrens. Danach wird der in die Ziehdüse eintretende Schmelzestrom durch ein entsprechend gestaltetes Druckgefälle dp/dl im Ziehdüseneinlauf in eine Vielzahl von Einzelfäden aufgespalten (1. Stufe), die dann in einer anschließenden Ausziehzone bei im wesentlichem konstantem Druck weiter ausgezogen werden (2. Stufe). Besonders kritische Parameter dieses Verfahrens sind die Einlaufströmung, der Übergang von Einlaufströmung zu Ausziehströmung und die Aufrechterhaltung des im wesentlichen konstanten Druckes über eine hinreichende Länge in der Ausziehzone.

Um diesen kritischen Parametern Rechnung zu tragen wird nach den speziellen Lösungsvorschlägen der europäischen Patentanmeldung EP-A1-38 989 der Druck oberhalb des Ziehdüseneinlaufs und der Druck am Ende des Ausziehbereiches vorgegeben. Im Falle des bevorzugten Einsatzes von Treibstrahldüsen zur Erzeugung des Druckgefälles sind diese unterhalb des Ausziehbereiches angeordnet.

Aus energietechnischen und weiteren Gründen wäre es jedoch wünschenswert, die Treibstrahlen oberhalb des Ausziehbereiches anzuordnen. Bei einer solchen Anordnung stünde das Treibgas zusätzlich als Kühlmedium im Einlaufbereich der Ziehdüse (Kühlung der Düsenoberkante) und im Ausziehbereich sowohl als Ausziehmedium, auch zur Verdünnung der Faser/Gas-Dispersion, und zur Kühlung der Düsenwand zur Verfügung. Dem stand entgegen, daß die Vermischung der Treibstrahlen mit der in den Düseneinlauf eingesaugten Luft – im folgenden als Saugluft bezeichnet – eine erhebliche Störung des Faserbildungsprozesses darstellt.

Es wurde nun gefunden, daß die Vermischung von Treibgas und Saugluft für den Faserbildungsprozeß störungsarm durchgeführt werden kann, wenn die Treibstrahlen möglichst nah unterhalb des Düseneinlaufs in die Ziehdüse eintreten und im wesentlichen parallel zur Ziehdüsenachse (bei kreissymmetrischer Ziehdüse) oder zur Ziehdüsenmittelebene (bei schlitzförmiger Ziehdüse) eintreten.

Die nachfolgende Beschreibung bezieht sich insbesondere auf die Zerfaserung von Mineralschmelzen. Jedoch ist die Erfindung nicht auf Mineralschmelzen beschränkt, sondern umfaßt auch die Zerfaserung von organischen und sonstigen anorganischen Materialien, insbesondere auch die Zerteilung von Metallschmelzen.

Gegenstand der vorliegenden Erfindung ist eine Ziehdüse zur Zerteilung von Schmelzen nach dem Düsenblasverfahren bestehend aus einem Düseneinlauf, unterhalb des Düseneinlaufs in die Ziehdüse eintretenden Treibstrahlen und einem leicht divergierenden Ausziehteil mit folgenden Merkmalen :

a) Die Kontur des Düseneinlaufs von der Düsenoberkante verläuft zunächst mit einem Radius R der zwischen den Radien $R_1$ = 25% und $R_2$ = 40% der engsten Querschnittabmessung d der Ziehdüse liegt und danach parallel oder bis zu 2° divergent zur Ziehdüsenachse oder Ziedüsenmittenebene bis zu einer Tiefe unterhalb der Ziehdüsenoberkante, die nicht größer ist als die engste Querschnittsabmessung d der Ziehdüse ;

b) an den Düseneinlauf schließt sich der Ausziehteil an, dessen obere Querschnittsabmessung 1,5 bis 2,4 mal so breit ist wie die engste Querschnittsabmessung d der Ziedüse ;

c) der Ausziehteil erweitert sich über eine Länge mindestens dem 6-fachen der engsten Querschnittsabmessung d der Ziehdüse mit einem Erweiterungswinkel von 1° bis 2,4° ; und

2

d) im Zwischenquerschnitt zwischen Unterkante des Düseneinlaufs und Oberkante des Ausziehteils sind Treibstrahldüsen vorgesehen, deren Achse zwischen +5° und −2° zur Ziehdüsenachse oder Ziedüsenmittenebene hin geneigt ist.

Die Unterkante des Düseneinlaufs und die Oberkante des Ausziehteils liegen in einer Ebene senkrecht zur Ziehdüsenachse bzw. -mittelebene.

Das erfindungsgemäße Verfahren zum Betrieb der Ziehdüse nach Ansprüchen 1 bis 5 besteht darin, daß im unteren Drittel des Ausziehteils (7) ein zwischen 0,25 und 0,4 des Umgebungsdrucks vor dem Einlauf (6) der Ziehdüse betragender Solldruck vorgegeben wird, der Druck zumindest periodisch gemessen wird und bei Abweichungen des gemessenen Drucks vom Solldruck die Treibstrahlgeschwindigkeit oder der Abstand zwischen Schmelzetiegel und Ziehdüse derart verändert wird, daß der Solldruck wieder hergestellt wird. Vorzugsweise soll die Geschwindigkeit der Treibstrahlen an ihrem Eintritt in den Ausziehteil der Ziehdüse das 1,5- bis 2,5-fache der Schallgeschwindigkeit sein, wobei der Massenstrom des als Treibgas eingeführten Gases etwa so bemessen sein soll, daß er das 3- bis 1,5-fache des in den Düseneinlauf eintretenden Saugluft-Massenstromes beträgt. Die Durchsatzmenge (Massenstrom) der in die Ziehdüse eintretenden Saugluft ist eine durch den Einlaufquerschnitt relativ gut definierte Größe, da sie aufgrund des sich am engsten Querschnitt des Ziehdüseneinlaufs einstellenden kritischen Druckes von etwa 0,5-fachem Umgebungsdruck oberhalb des Einlaufs festgelegt ist. Im Ausziehbereich der Ziehdüse herrscht eine Überschallgeschwindigkeit von mindestens 1,5-facher Schallgeschwindigkeit.

Vorzugsweise soll die Vermischung von Treibstrahlen und Saugluft bei konstantem und für beide gleichem Druck erfolgen. Die Saugluft soll demnach am Ende des Düseneinlaufs den selben Druck aufweisen wie die Treibstrahlen am Treibstrahlauslaß. Der Düseneinlauf selbst ist daher vorzugsweise als Lavaldüse ausgebildet mit einem konvergierenden Teil, in dem der Druck bis zum kritischen Druck abfällt und danach mit einem divergierenden Teil, in dem der Druck weiter bis auf den im Ausziehteil der Düse vorgesehenen Druck weiter abfällt.

Die Erfindung betrifft auch Steinwolle-oder Glasfasern mit einer mittleren Faserdicke von 3 bis 6 μ und einer Standardabweichung der Faserdicke von weniger als 2,5 μ erhältlich nach dem Verfahren gemäß Anspruch 6.

Der Düseneinlauf wirkt auch dann noch als Lavaldüse, wenn der an den konvergierenden Düseneinlaufteil anschließende Teil einen konstanten Querschnitt hat, d.h. die Kontur parallel zur Ziehdüsenachse verläuft. Es kommt dann nämlich zu einer Ablösung der Einlaufströmung von der Einlaufkontur, die einen kleineren engsten Strömungsquerschnitt, bei dem sich der kritische Druck einstellt, bewirkt, als der tatsächliche Querschnitt der Düsenkontur. Von diesem engsten Strömungsquerschnitt erweitert sich die Strömung dann wieder auf den Düsenquerschnitt am Ende des Düseneinlaufs. Es bildet sich also eine Lavalströmung « ohne Wand ». Auch die Treibstrahldüsen werden vorzugsweise als Lavaldüsen ausgeführt, so daß der Druck bereits innerhalb der Düse auf den im Ausziehteil gewünschten Druck abfällt.

Der Druckgradient im Ziehdüseneinlauf vor der engsten Querschnittsabmessung d wird durch die Gestaltung des Ziehdüseneinlaufs bewirkt. Der Druckgradient soll oberhalb von $\Delta p \cdot d / \Delta 1 = 1,2$ bar liegen.

Wenn die Kontur des Ziehdüseneinlaufs von der Ziehdüsenoberkante an zwischen den Radien $R_1 = 25\%$ und $R_2 = 40\%$ der engsten Querschnittsabmessung d verläuft, werden Druckgradienten von $\Delta p \cdot d / \Delta 1$ zwischen 1,2 und 2 bar erreicht. Für d = 4 mm kann der Druckgradient $\Delta p$ durch $\Delta 1$ zwischen 0,3 bis 0,5 bar pro mm liegen.

Es ist aber auch möglich, den geforderten Druckgradienten dadurch zu erzeugen, daß im Ziehdüseneinlauf Gasstrahlen (Querstrahlen) im wesentlichen quer zur Richtung der Einlaufströmung, die sich ohne die Gasstrahlen ausbilden würde, in die Einlaufströmung einzublasen. Hierdurch ist es in Abhängigkeit von der Geschwindigkeit der Querstrahlen und ihrer Intensität (d.h. des im Verhältnis zum Saugluftmassenstrom eingeblasenen Querstrahlmassenstromes) relative Druckgradienten von $\Delta p \cdot d : \Delta 1$ von 1,2 bis 4 bar zu erreichen. Die Gasstrahlen werden vorzugsweise wenig oberhalb der Stelle, an der sich der kritische Druck ausbildet, eingeblasen. Sie bewirken einerseits eine Verengung des Einlaufquerschnitts und stellen ferner zusätzliche zu beschleunigende Gasmassen zur Verfügung. Der Massenstrom des als « Querstrahlen » eingeblasenen Gases soll vorzugsweise 2 bis 40% des Saugluftstromes, besonders bevorzugt 5 bis 20% des Saugluftstromes, betragen. Ihre Geschwindigkeit beträgt bevorzugt 1- bis 3-fache Schallgeschwindigkeit.

Besonders bevorzugt wird die bevorzugte Einlaufkontur mit dem Einsatz von Querstrahlen kombiniert, wobei bevorzugte Druckgradienten von $\Delta p \cdot d / \Delta 1 = 2,4$ bis 4 bar erzielt werden. Für eine Ziehdüse mit d = 4 mm bedeutet dies einen Druckabfall von 0,3 bis 0,5 bar auf 0,5 mm Länge.

Besonders vorteilhaft für die Faserbildung ist es, die Kante der Düsenstruktur, an der Einlaufströmung und Treibstrahlen miteinander in Berührung treten, scharfkantig auszubilden, so daß sowohl Saugluft als auch Treibgas bis zum Zusammentreffen geführt werden. Jedoch muß hier der fertigungstechnische Aufwand für die Düsenherstellung gegen die Inkaufnahme kleiner Störungen bei der Vermischung von Treibstrahl und Saugluft abgewogen werden. Besonders bevorzugt werden die Treibstrahlen als eine Vielzahl von im wesentlichen

3

parallelen zur Mittelebene einer schlitzförmigen Ziehdüse oder auf einem Radius um die Achse einer kreisförmigen Ziehdüse angeordneten Einzelbohrungen ausgeführt. Dabei sollen die Treibstrahldüsen besonders bevorzugt so dicht nebeneinander angeordnet sein, daß die Austrittsquerschnitte des divergierenden Teils überlappen.

Da der Idealfall einer zwischen Saugluftströmung und Treibstrahlen scharfkantig ausgebildeten Düsenstruktur technisch nur sehr schwer zu verwirklichen ist, ist bei der Verfahrensführung und/oder Düsenkonstruktion eine Nachexpansion von Saugluftstrom und Treibstrahl in dem « Strömungshohlraum », der in der Zwischenquerschnittsebene zwischen Saugluftstrom und Treibstrahl entsteht, zu berücksichtigen. Durch die Nachexpansion fällt der Druck der Treibstrahlen und der Saugluft unterhalb des Zwischenquerschnitts weiter ab. Die Forderung nach gleichem Druck von Treibstrahl und Saugluftströmung ist für den Bereich nach erfolgter Nachexpansion zu erfüllen. Der Zusammenhang zwischen Querschnitts-, Druck-, Temperatur- und Geschwindigkeitsänderungen von Gasströmen ist aus der allgemeinen Strömungslehre bekannt. Im Falle der erfindungsgemäßen Zerteilungsdüsen für Schmelzen muß der Einfluß der Schmelze auf die Gasströmung berücksichtigt werden. Dies erfolgt zweckmäßig aufgrund von Vorversuchen, da eine theoretische Ermittlung der Parameter für die Gasströmungen kaum mehr möglich ist.

Die Lange des Einlaufteils von der Oberkante der Ziehdüse bis zur Ebene des Zwischenquerschnitts soll so kurz wie möglich sein. Die Mindestlänge des Einlaufteils ist durch die Notwendigkeit der Treibgaszufuhr und die Ausbildung von Treibstrahldüsen bestimmt.

Eine Länge des Einlaufteils von 0,2 d (d = engste Querschnittsabmessung der Ziehdüse) kann aus konstruktiven Gründen daher kaum unterschritten werden. Die Länge des Einlaufteils soll vorzugsweise unterhalb 0,8 d, besonders bevorzugt zwischen 0,5 d und 0,8 d liegen.

Die Forderung nach einem möglichst kurzen Ziehdüseneinlauf verlangt einen strömungstechnisch an sich ungünstigen, sehr engen Querschnitt für die Treibstrahlzufuhrleitung, sowie eine ebenfalls ungünstige scharfkantige, etwa rechwinklige Umlenkung der Strömung von der Treibstrahlzufuhrleitung zur Treibstrahldüse. Ferner verlangt die hohe Anforderung an Treibstrahldruck und Geschwindigkeit eine hohe Formgenauigkeit des Einlaufteils der Ziehdüse. Diese hohe Formgenauigkeit ist durch schlitzförmige Treibstrahldüsen, wie sie üblicherweise in ähnlichen Konstruktionen des Standes der Technik eingesetzt wurden, nicht zu gewährleisten. Die Treibstrahldüsen sind daher als eine Vielzahl von eng nebeneinanderliegenden Einzelbohrungen ausgeführt, die im wesentlichen rechtwinklig dazu aus aus ebenfalls Einzelbohrungen bestehenden Treibgaszufuhrleitungen gespeist werden. Die zwischen den Einzelbohrungen verbleibenden Stege gewährleisten die geforderte Formgenauigkeit des Einlaufteils.

Der Druckverlauf im Ausziehteil der Ziehdüse ist im wesentlichen durch den Erweiterungswinkel des Ausziehteils bestimmt. Ferner hängt dieser ab von der Menge der in die Ziehdüse eintretenden Schmelze, ihrer Viskosität und Temperatur, überhaupt den Zerfaserungseigenschaften der zu zerfasernden Mineralschmelze. Der geeignete Erweiterungswinkel für die Erzeugung eines konstanten Drucks innerhalb des Ausziehteils wird daher zweckmäßig in einer Versuchsdüse ermittelt.

Die Länge des Auszeihteils in dem der konstante Druck aufrechterhalten werden muß, soll vorzugsweise das 8- bis 20-fache der engsten Querschnittsabmessung d der Ziehdüse betragen.

Vorzugsweise enthält die Ziehdüse am Ende des Ausziehteils eine Bohrung quer zur Ziehdüsenachse bzw. Mittelebene, die die Messung des statischen Drucks in der Ziehdüse während des Betriebes erlaubt. Änderungen des Druckes während des Betriebes, z.B. aufgrund einer Dejustierung des über der Ziehdüse befindlichen Schmelzetiegels können dann periodisch oder kontinuierlich während des Betriebes durch eine Druckmessung festgestellt werden. Es ist dann möglich, den vorgewählten Solldruck durch Änderung der Treibstrahlgeschwindigkeit, des Abstandes von Schmelzetiegel und Ziehdüse, oder des Erweiterungswinkels im Ausziehteil der Ziehdüse wieder herzustellen. Zum Beispiel führt eine Vergrößerung des Abstandes von Schmelzetiegel zu Ziehdüse dazu, daß weniger Schmelze in die Düse eintritt und dadurch der Druck am Ende des Ausziehteils der Ziehdüse erniedrigt wird. Eine Erhöhung der Treibstrahlgeschwindigkeit wirkt ebenfalls einem Druckanstieg am Ende der Ziehdüse entgegen. Auch eine Vergrößerung des Erweiterungswinkels der Ziehdüse führt zu einer Druckerniedrigung.

Die kontinuierliche oder periodische Druckmessung am Ende des Ausziehteils der Ziehdüse während des Betriebes mit entsprechender Regelung des Druckes auf den vorgegebenen Sollwert gewährleistet die gleichmäßige Zerfaserung über lange Betriebszeiten.

In langgestreckten schlitzförmigen Ziehdüsen kann zusätzlich das Problem auftreten daß durch Gasströmungen in Richtung des Ziehdüsenschlitzes Längsinstabilitäten auftreten. Daher soll bei schlitzförmigen Düsen die engste Querschnittsfläche ein Seitenverhältnis von maximal 1 : 10, vorzugsweise ein Seitenverhältnis von 1 : 5 bis 1 : 8 aufweisen. Ziehdüsen mit längeren Schlitzen werden daher vorzugsweise aus Elementen zusammengesetzt, deren Breite in Richtung der Schlitzförmigen Ausdehnung maximal die 10-fache engste Querschnittsabmessung d beträgt, wobei die einzelnen Elemente gegeneinander abgeschottet sind. Besonders bevorzugt wird jedes der Elemente einzeln justierbar bezüglich Abstand vom Schmelzetiegel und/oder Erweiterungswinkel des Ausziehteils und/oder Treibstrahldruckgaszufuhr ausgeführt. In jedem Element erfolgt dann unabhängig voneinander die Druckmessung am Ende des Ausziehteils zur Regelung der Betriebsbedingungen.

Weitere Einzelheiten der Erfindung werden anhand der nachfolgenden Figuren beschrieben.

Figur 1 beschreibt eine schematische Darstellung der erfindungsgemäßen Ziehdüse sowie Druck und Geschwindigkeitsverläufe innerhalb der Ziehdüse.

Figur 2 zeigt eine vergrößerte Darstellung des Ziehdüseneinlaufs (Detail X aus Figur 1).

Figur 3 zeigt einen Schnitt 3-3 der Darstellung gemäß Figur 2.

Figur 4 zeigt eine perspektivische Darstellung von höhenjustierbaren Ziehdüsensegmenten mit automatischer Regelung des Druckes im Ausziehteil der Ziehdüse.

Figuren 5, 6 und 7 zeigen Anordnungen für « Querstrahlen ».

Figuren 8, 9 und 10 zeigen erfindungsgemäß erhaltene Faserdickenverteilungen für verschiedene Mineralschmelzen.

Figuren 11 und 12 erläutern Herstellungsverfahren für den Einlaufteil der Ziehdüse.

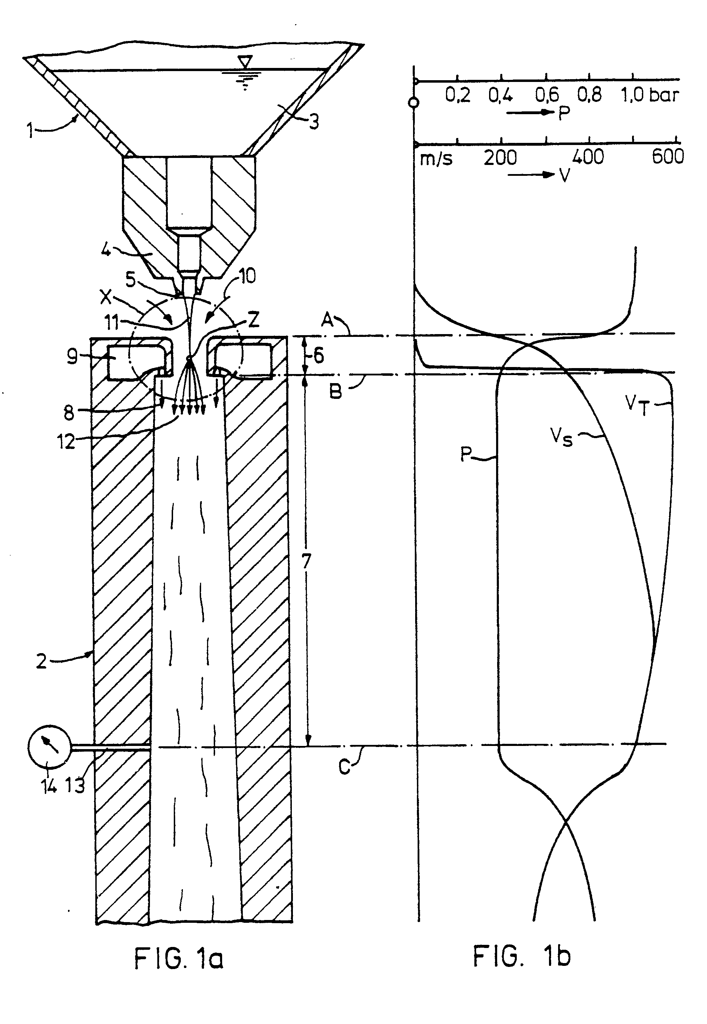

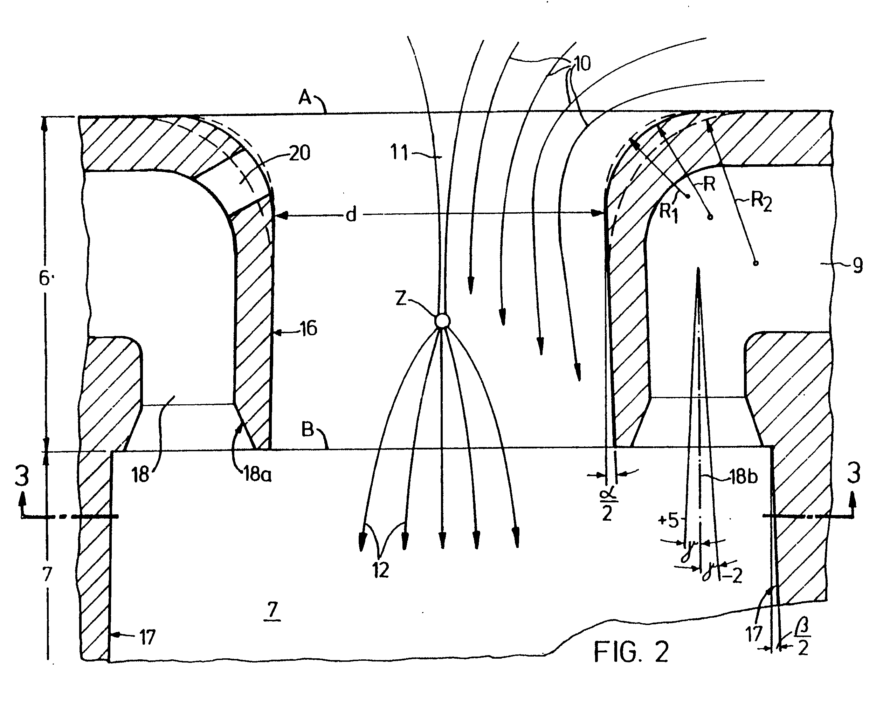

Figur 1 zeigt auf der linken Seite schematische Darstellung der Kombination aus Schmelzetiegel 1 und Ziehdüse 2. Der Tiegel 1 enthält die Mineralschmelze 3. An seiner Unterkante weist der Schmelztiegel einen elektrisch beheizten Schmelzeausflußteil 4 mit Schmelzeaustrittsnippeln 5 auf. Die Ziehdüse besteht aus einem Einlaufteil 6 und einem Ausziehteil 7. Am Übergang von Einlaufteil 6 zu Ausziehteil 7 treten die Treibstrahlen 8 in den Ausziehteil ein. Die Treibstrahlen 8 werden aus Druckgaskammern 9 gespeist. Die Zuleitungen zu den Druckgaskammern 9 sind nicht gezeichnet. Aufgrund der Saugwirkung der Treibstrahlen 8 wird Umgebungsgas von oberhalb des Ziehdüseneinlaufs eingesaugt. Es bildet sich die Einlaufströmung 10 aus. Der aus dem Nippel 5 an der Unterkante des Schmelzetiegels 1 austretende Schmelzestrom 11 wird unter der Saugwirkung der Einlaufströmung 10 beschleunigt und verengt sich. Aufgrund des Druckgefälles im Düseneinlauf spaltet der Schmelzestrom 11 etwa beim Punkt Z in eine Vielzahl einzelner Sekundärfäden 12 auf. Die konstruktiven Merkmale des Düseneinlaufs werden anhand der vergrößerten Ausschnittsdarstellung der Figur 2 später erläutert. Die Darstellung zeigt ferner eine Bohrung 13 quer zur Ziehdüsenmittelebene, die der Druckmessung mittels Druckmeßgerät 14 dient.

Die rechte Seite der Figur 1 zeigt die Druck- und Geschwindigkeitsverhältnisse innerhalb der Ziehdüse. Dabei bezeichnet p den Druck in der Ziehdüse. Die kritischen Ebenen wie Düsenoberkante A, Ende des Ziehdüseneinlaufs*) B und Ende des Ausziehteils C sind jeweils in das Druck-und Geschwindigkeitsdiagramm übertragen. Das Diagramm zeigt, daß der Gasdruck oberhalb des Ziehdüseneinlaufs zunächst langsam abfällt und etwa beim Durchtritt durch die Ebene in Höhe der Ziehdüsenoberkante den stärksten Druckradienten aufweist, um dann auf das angestrebte konstante Druckniveau innerhalb des Ausziehteils überzugehen. Danach erfolgt ein abrupter Druckanstieg, der Übergang zur Unterschallströmung durch Verdichtungsstoß.

Die Kurve $V_s$ beschreibt die Geschwindigkeit der Saugluft. Sie erreicht kurz hinter der Düsenoberkantenebene A Schallgeschwindigkeit und steigt unter Vermischung mit den Treibstrahlen allmählich auf 1,7-fache Schallgeschwindigkeit an.

Die dritte gezeichnete Kurve $V_T$ beschreibt die Geschwindigkeit des Treibgases. Dieses tritt mit etwa doppelter Schallgeschwindigkeit aus der Treibstrahldüse aus und verliert allmählich unter Vermischung mit der Saugluft an Geschwindigkeit. Nachdem Treibgas und Saugluft vermischt sind, d.h. die gleiche Geschwindigkeit erreicht haben, ist der weitere Geschwindigkeitsverlust durch die Abgabe von kinetischer Energie an die Fasern zum Ausziehen und zur weiteren Beschleunigung bedingt. Die nachfolgende Tabelle gibt typische Daten für die entstehenden Fasern für die verschiedenen Phasen des Faserbildungsprozesses wieder. Dabei bezeichnet D den Durchmesser der Faser, $V_F$ die Geschwindigkeit der Faser und N die Anzahl der Fasern, die aus einem Nippel des Schmelzetiegels entstehen :

*) (Zwischenquerschnittsebene)

Tabelle

| | D μm | $V_z$ m/s | N Anzahl |
|---|---|---|---|
| Nippel | 1500 | ~ 0 | 1 |
| Ebene A | 290 | 1,5 | 1 |
| Ebene B | 35 | 2,5 | 40 |
| Ebene C | 4 | 200 | 40 |

Figur 2 zeigt nun einen vergrößerten Ausschnitt X aus Figur 1. Es ist ein Querschnitt durch eine schlitzförmige oder kreissymmetrische erfindungsgemäße Ziehdüse dargestellt. Beginnend von der Ebene A ist die Einlaufkontur 16 der Ziehdüse zunächst durch den konvergierenden Teil mit dem Radius R, der zwischen den Radien $R_1$ = 25% und $R_2$ = 40% des engsten Querschnitts der Ziehdüse, der in der Figur mit d bezeichnet ist, liegen soll, definiert. Der weitere Verlauf der Kontur 16 ist leicht divergent, wobei die Kontur zu einer Parallelen zur Ziehdüsenachse bzw. -mittelebene bis zu einem Winkel von OC/2 = 1° geneigt ist.

In der Ebene B erweitert sich der Querschnitt der Ziehdüse zum Ausziehteil. Die Begrenzungswand 17 des Ausziehteils ist um einen Winkel β/2 von 0,5 bis 1,2° gegen eine Parallele zur Ziehdüsenachse bzw. -mittelebene geneigt.

In der Ebene B münden ferner die Treibstrahldüsen 18 in den Ausziehteil 7 ein. Die Treibstrahldüsenachse 18 b ist parallel zur Ziehdüsenachse gezeichnet. Sie kann um einen Winkel γ von +5° bis −2° gegen die Ziehdüsenachse bzw. Mittelebene geneigt sein. Ferner ist ein Schmelzestrom 11 eingezeichnet, der am Zerfaserungspunkt Z in eine Vielzahl von Sekundärfäden 12 aufspaltet. Mit 10 sind die Stromlinien der Einlaufströmung bezeichnet.

Ferner sind in die Figur noch Querstrahldüsen 20 eingezeichnet, aus denen zur Erhöhung des Druckgefälles im Düseneinlauf Gasstrahlen austreten, die aus der Druckgaskammer 9 gespeist werden.

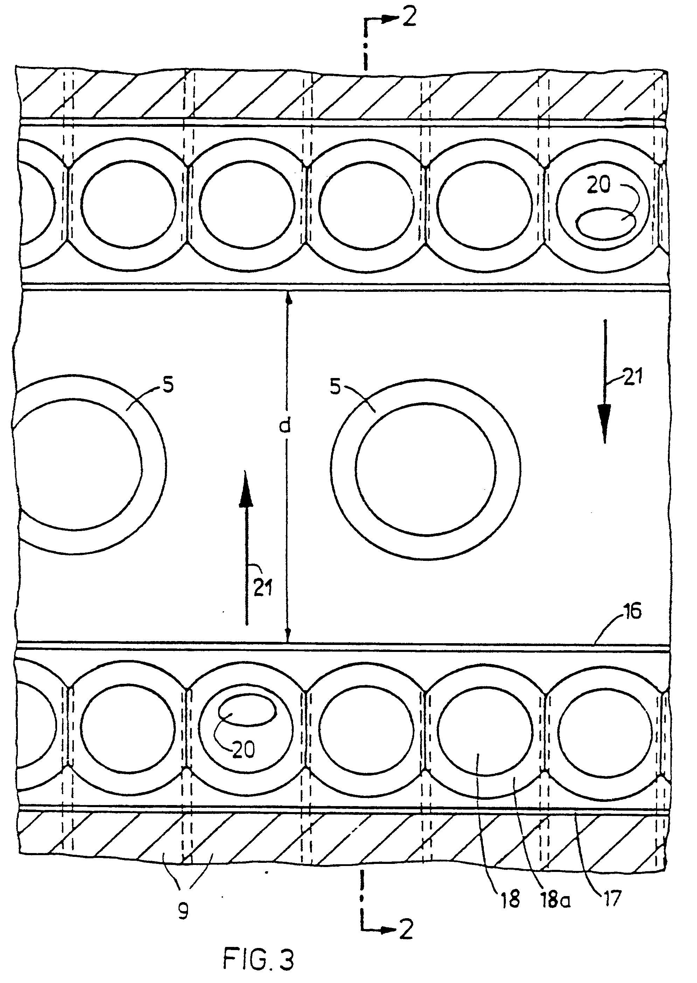

Figur 3 stellt einen Schnitt entsprechend Linie 3-3 in Figur 2 dar, wobei der Austritt der Treibstrahlen 18 von unten dargestellt ist. Die Darstellung zeigt die Ausführungsform einer schlitzförmigen Ziehdüse im Ausschnitt. Die Treibstrahldüsen 18 sind gemäß der besonders bevorzugten Ausführungsform der vorliegenden Erfindung so dicht angeordnet, daß die divergierenden Teile 18a der Treibstrahldüsen überlappen. Im übrigen bezeichnen die Zahlen in der Figur analoge Elemente wie in Figur 2. Zusätzlich sind die Schmelzeaustrittsöffnungen (Nippel) 5 eingezeichnet. Die Pfeile 21 bezeichnen « Querstrahlen », Ziffer 20 die Querstrahldüsen. Ferner sind durch verdeckte Linien die Treibstrahlzufuhrleitungen 9 angedeutet.

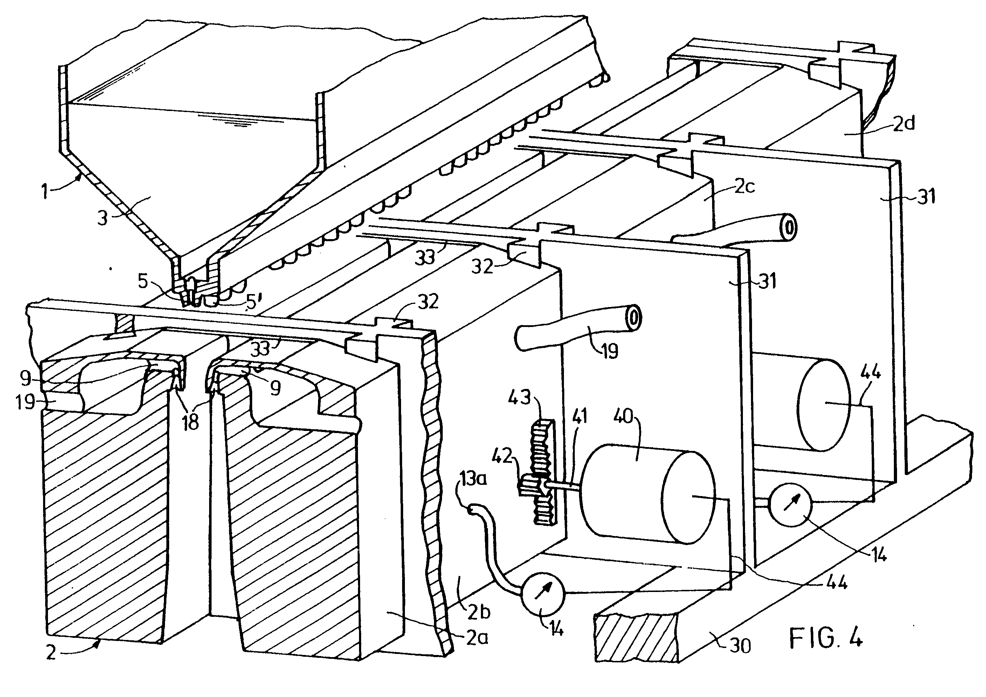

Figur 4 zeigt eine erfindungsgemäß bevorzugte Ausführungsform der erfindungsgemäßen Ziehdüse in Segmentbauweise, wobei die einzelnen Segmente getrennt höhenjustierbar sind. Die Ziehdüsen sind auf einem Träger 30 angeordnet, der eine Vielzahl von vertikal hierauf befestigten Trägerplatten 31 trägt. Zwischen den Trägerplatten 31 sind Ziehdüsensegmente 2a, 2b, 2c und 2d dargestellt. Die Ziehdüsensegmente können über Schwalbenschwanzführungen 32 getrennt in der Höhe verschoben werden. Für die Höhenverschiebungen sind Elektromotoren 40 an den Trägerplatten 31 befestigt, die über die Welle 41 und die Zahnräder 42 auf die mit dem jeweiligen Ziehdüsensegment verbundenen Zahnstangen 43 wirken.

Der Druck im Ausziehteil 7 der Ziehdüse wird durch eine nicht gezeichnete Bohrung die vertikal zur Ziehdüsenmittelebene in den Ausziehteil mündet, und Druckleitung 13a am Druckmeßgerät 14 gemessen. In einer besonders bevorzugten Betriebsweise vergleicht das Druckmeßgerät 14 den Druck mit einem vorgegebenen Solldruck und steuert über Leitung 44 zur Regelung des Drucks im Ausziehteil 7 den Motor 40 an. Jedes Ziehdüsensegment weist ferner eine getrennte Druckgaszufuhrleitung 19 für die Druckkammer 9 zur Speisung der Treibstrahldüsen 18 auf. Die einzelnen Ziehdüsensegmente sind durch Abschlußbleche 33 gasdicht abgeschottet. Oberhalb der Ziehdüse ist ein Schmelzetiegel 1 mit Schmelze 3 dargestellt. Der hier gezeigte Schmelzetiegel weist eine auf Lücke gegeneinander versetzte Doppelreihe von Schmelzeausflußöffnungen 5 und 5′ auf.

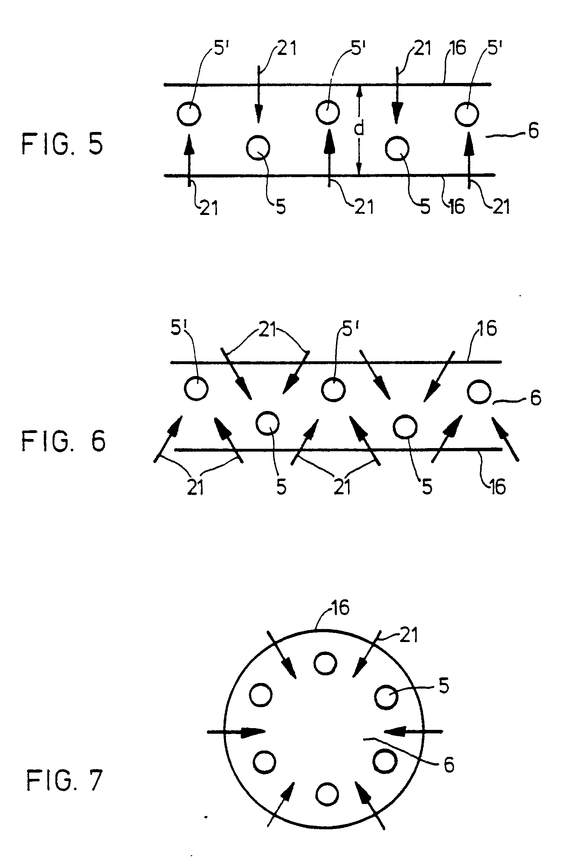

Figuren 5, 6 und 7 geben bevorzugte Anordnungen für Querstrahlen wieder. Es ist jeweils schematisch eine Aufsicht auf den Ziehdüseneinlauf 6 dargestellt. Die horizontale Schnittlinie durch die Ziehdüse am engsten Querschnitt d ist mit 16 bezeichnet. In den Ziehdüseneinlauf 6 sind die Schmelzeaustrittsöffnungen 5 des Schmelzetiegels hereinprojiziert. Es ist eine Anordnung analog Figur 4 mit Schmelzeaustrittsöffnungen in Doppelreihe 5 und 5′ gezeigt. Die in Figur 2 dargestellte Querstrahldüse 20 ist nicht gezeichnet, jedoch deuten die Pfeile 21 die Querstrahlen an. Figur 7 zeigt eine analoge Darstellung für eine kreissymmetrische Ziehdüse, wobei aus dem darüber angeordneten Schmelzetiegel Schmelzeströme aus den Schmelzeausflußöffnungen 5 in die Ziehdüse eintreten.

6

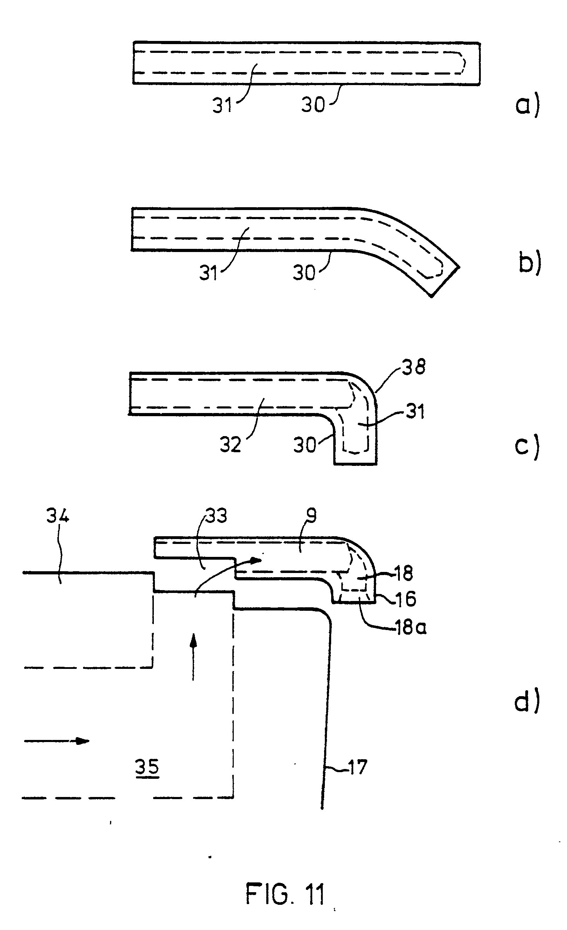

Fig. 11 erläutert ein Herstellungsverfahren für den Einlaufteil der erfindungsgemäßen Ziehdüse. Bei der Herstellung wird von einem Blech 30 von z.B. 2 mm Dicke ausgegangen (Fig. 11 a), das senkrecht zur Zeichnungsebene eine Ausdehnung hat, die einem Ziehdüsensegment entspricht, z.B. 25 mm. In dieses Blech werden 13 parallele Bohrungen 31 mit dem gewünschten Treibstrahldurchmesser von z.B. 1,1 mm im Abstand von je 1,8 mm zueinander eingebracht. Das Blech wird dann im wesentlichen rechtwinklig (Fig. 11b, Fig. 11c) so umgebogen, daß die Einlaufkontur 38 entsteht. Beim Umbiegen können die Bohrungen 31 z.B. mit Feinsand, gegebenenfalls mit einem organischen Bindemittel, ausgefüllt werden. Nach dem Umbiegen können die Bohrungen 31 mit Treibstrahldüsendurchmesser zur Ausbildung von Treibstrahlzufuhrleitungen, z.B. auf 1,6 mm, aufgebohrt werden (Ziffer 32). Das Blech wird dann spanabhebend bearbeitet und der Erweiterungsteil 18a der Treibstrahldüse 18 ausgebildet. Der Erweiterungsteil 18a erhält dabei einen Austrittsradius von 1,9 mm, so daß die einzelnen Austrittsteile der Treibstrahldüsen überlappen. Ferner wird der Bereich 33 entfernt, so daß die Treibstrahlzufuhrleitungen 9 in diesem Bereich zur Hälfte aufgeschnitten sind. Der Einlaufteil wird dann auf das darunter gezeichnete Teil 34 aufgeschweißt, das den Ausziehteil 17 und Treibstrahldruckkammern 35 enthält. Die Treibluft tritt aus dem Teil 34 entsprechend den eingezeichneten Pfeilen in die Treibstrahlzufuhrleitung 9 ein.

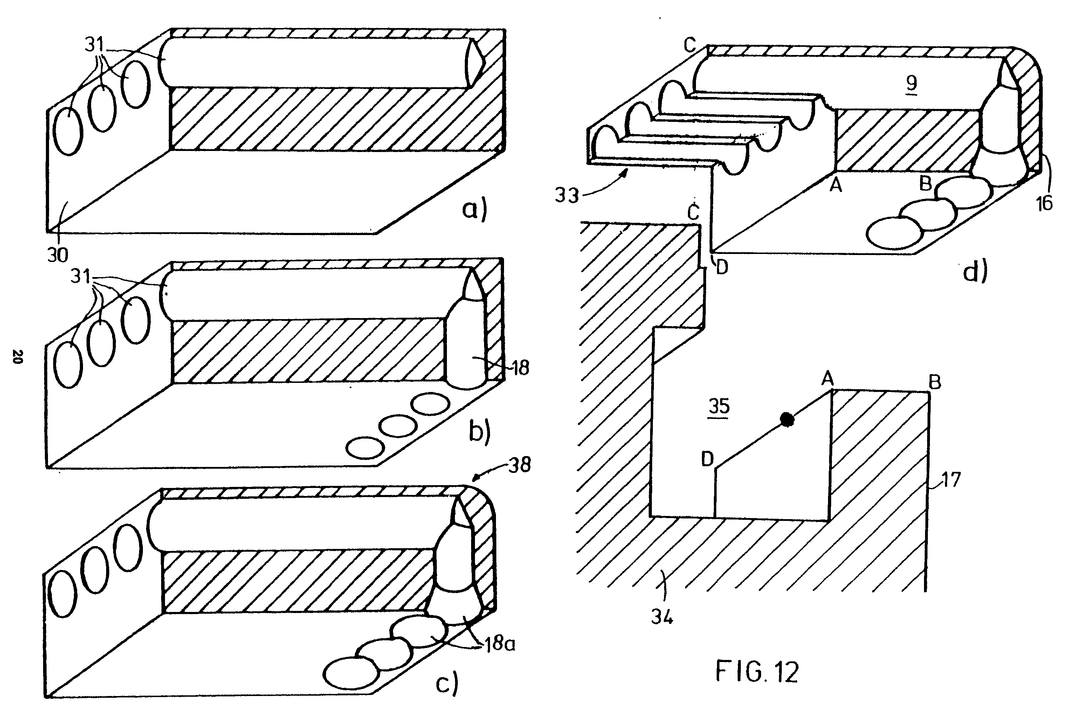

Eine andere Herstellungsmöglichkeit für den Einlaufteil der Ziehdüse ist in Fig. 12 dargestellt. Es wird wieder von einem Blech 30 ausgegangen, daß eine Dicke aufweist, die der gewünschten Länge des Einlaufteils entspricht, z.B. 2,5 mm. Im Abstand von 1,0 mm von der Oberkante des Blechs werden Bohrungen 31 mit dem Treibstrahlzufuhrleitungsdurchmesser von 1,6 mm eingebracht (Fig. 12a). Die Bohrungen 31 weisen einen Abstand von 1,8 mm auf. Danach werden (Fig. 12b) die Treibstrahlbohrungen 18 mit einem Durchmesser von 1,1 mm eingebracht. Der Erweiterungsteil 18a erhält einen Austrittsdurchmesser von 1,9 mm. Ferner wird die Einlaufkontur 38 dargestellt (Fig. 12c). Gemäß Fig. 12d wird nach Entfernung des Bereichs 33 das Einlaufteil auf die Struktur 34 aufgeschweißt, wobei jeweils die mit Großbuchstaben bezeichneten Ecken des Einlaufteils mit entsprechend bezeichneten Ecken des Teils 34 in Berührung kommen.

## Ausführungsbeispiel 1

Es wurde eine erfindungsgemäße Vorrichtung gemäß Figur 4 eingesetzt. Die Maße betrugen : engster Querschnitt im

Ziehdüseneinlauf d = 4 mm
Radius des konvergierenden Teils R = 1,8 mm,
Durchmesser der Treibstrahldüsen 1 mm,
Durchmesser am Ausgang der Treibstrahldüsen 1,5 mm,
Breite am Anfang des Auszieheils 8 mm,
Erweiterungswinkel des Auszieheils 1,5°,
Luftdruck in der Treibgaskammer 9 = 6 bar,
Gasdruck im Auszieheil der Ziehdüse 0,35 bar,
Länge des Auszieheils 60 mm,
Länge des Ziehdüseneinlaufs 3 mm,
Durchmesser der Schmelzeausflußöffnungen 1,6 mm,
Länge eines Ziehdüsensegmentes 25 mm,
Anzahl der Düsennippel, die in einem Segment münden : 15 in Doppelreihe,
Anzahl der Segmente : 16.

Unterhalb des Auszieheils der Ziehdüse wird zusätzlich ein Unterschalldiffusor angebracht, um die Geschwindigkeit der aus dem Auszieheil der Ziehdüse austretenden Faser/Luftgemische zu reduzieren.

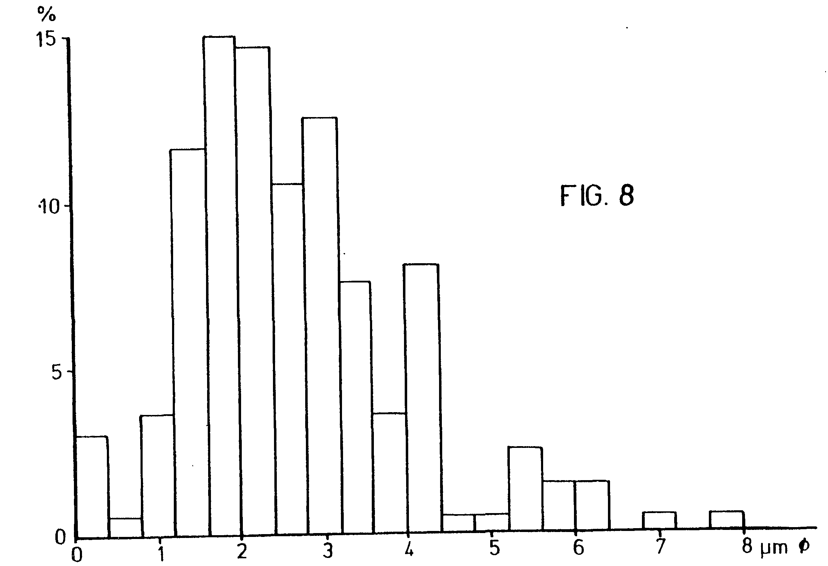

In den Tiegel wurde eine Diabasschmelze eingeführt, die mit einer Geschwindigkeit von 5 cm/s je Schmelze- austrittsöffnung ausfloß. Es wurden Fasern einer Länge zwischen 10 und 30 mm mit einem mittleren Durchmesser von 3,8 µ und einer Standardabweichung der Faserdicke von 1,97 erhalten. Die Faserdurchmesserverteilung ist in Fig. 8 dargestellt. Die erhaltenen Fasern wiesen ferner einen Perlengehalt mit Durchmesser größer 50 µ von 25,8 Gew,-% auf.

Der Perlengehalt wurde in der üblichen Weise bestimmt, indem die Fasern zunächst zur Versprödung auf Temperaturen von 500 bis 600° aufgeheizt wurden, danach auf einem Sieb mit 50 µ Maschenweite in Gegenwart von Gummiwürfeln vermahlen wurden. Der Siebrückstand ergab den Perlengehalt.

## Ausführungsbeispiel 2

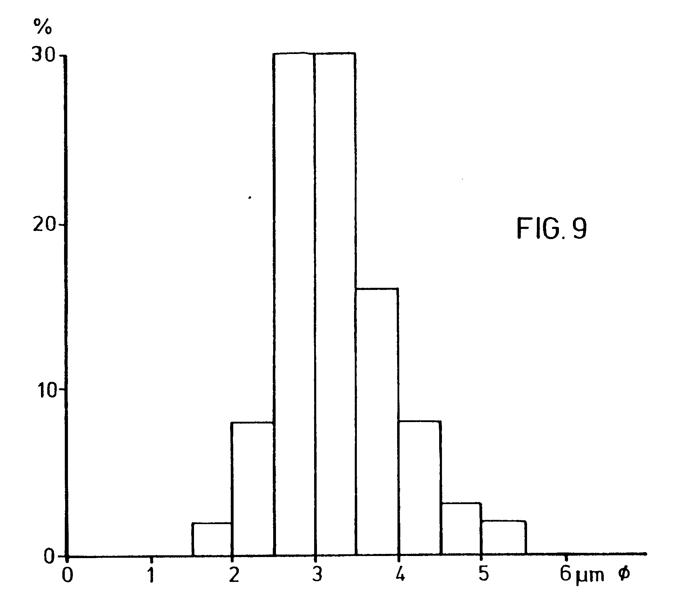

Es wurde dieselbe Vorrichtung wie in Beispiel 1 eingesetzt. In den Tiegel wurde C-Glas eingelassen. Die Zerfaserungsbedingungen waren dieselben wie in Beispiel 1. Es war lediglich notwendig, die Ziehdüse näher an den Schmelzetiegel heranzufahren, damit der Druck im Ausziehteil gewährleistet werden konnte. Es wurden Fasern einer Länge von 5 bis 15 mm erhalten. Die Faserdurchmesserverteilung ist in Figur 9 angegeben. Die Bestimmung des Dickstellengehaltes erfolgte in der für Glasfasern üblichen Weise, indem die Fasern in Wasser aufgeschlemmt und zerkleinert wurden. Die sedimentierten dicken Faserbruchstücke wurden getrocknet und gewogen. Dabei ergab sich ein Dickstellenanteil von 20 Gew.-%.

Ausführungsbeispiel 3

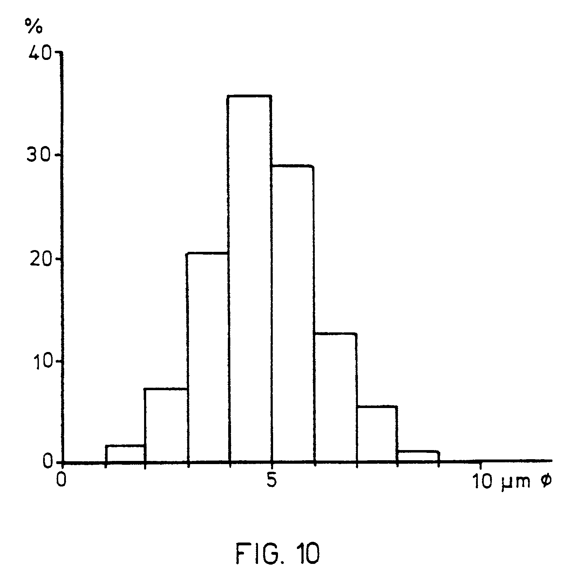

In gleicher Weise wie in Beispiel 2 wurde E-Glas zerfasert. Die erhaltene Faserdickenverteilung ist in Figur 10 dargestellt. Der Dickstellenanteil größer 15 μ betrug 7%.
Die hier angegebenen Standardabweichungen wurden nach der folgenden Formel berechnet :

$$S = \sqrt{\frac{1}{N-1} \sum_{i=1}^{N} (x_i - \bar{x})^2}$$

**Ansprüche**

1. Ziehdüse zur Zerteilung von Schmelzen nach dem Düsenblasverfahren, bestehend aus einem Düseneinlauf (6) unterhalb des Düseneinlaufs (6) in die Ziehdüse eintretenden Treibstrahlen (8) und einem leicht divergierenden Ausziehteil (7) mit folgenden Merkmalen :
a) Die Kontur (16) des Düseneinlaufs (6) von der Düsenoberkante A verläuft zunächst mit einem Radius R, der zwischen den Radien $R_1 = 25\%$ und $R_2 = 40\%$ der engsten Querschnittsabmessung d der Ziehdüse liegt und danach parallel oder bis zu 2° divergent zur Ziehdüsenachse oder Ziehdüsenmittenebene bis zu einer Tiefe unterhalb der Ziehdüsenoberkante, die nicht größer ist als die engste Querschnittsabmessung d der Ziehdüse ;
b) an den Düseneinlauf (6) schließt sich der Ausziehteil (7) an, dessen obere Querschnittsabmessung 1,5- bis 2,4-mal so breit ist wie die engste Querschnittsabmessung d der Ziehdüse ;
c) der Ausziehteil erweitert sich über eine Länge von mindestens dem 6-fachen der engsten Querschnittsabmessung d der Ziehdüse mit einem Erweiterungswinkel von 1 bis 2,4° und
d) im Zwischenquerschnitt zwischen Unterkante des Düseneinlaufs (6) und Oberkante des Ausziehteils (7) sind Treibstrahldüsen (18) vorgesehen, deren Achse zwischen 5 und –2° zur Ziehdüsenachse oder Ziehdüsenmittenebene geneigt ist.
2. Ziehdüse nach Anspruch 1, dadurch gekennzeichnet, daß die Treibstrahldüsen (18) als Lavaldüsen ausgebildet sind.
3. Ziehdüse nach einem der Ansprüche 1 oder 2, dadurch gekennzeichnet, daß die Ziehdüse schlitzförmig ausgebildet ist und in Richtung der schlitzförmigen Ausdehnung aus gegeneinander abgeschotteten Segmenten (2a, 2b, 2c, 2d) besteht, deren Breite in Richtung der schlitzförmigen Ausdehnung nicht größer ist als die 10-fache engste Querschnittsabmessung d.
4. Ziehdüse nach einem der Ansprüche 1 bis 3, dadurch gekennzeichnet, daß im konvergierenden Teil des Ziehdüseneinlaufs (6) Gasdüsen (20) vorgesehen sind, wobei die Hauptrichtungskomponente der Achse der Düsen senkrecht auf die Ziehdüsenmittenebene weist.
5. Ziehdüse nach Anspruch 3, dadurch gekennzeichnet, daß Mittel (32, 40, 41, 42, 43) zur Höhenjustierung der Segmente (2a, 2b, 2c, 2d) gegeneinander vorgesehen sind.
6. Verfahren zum Betrieb der Ziehdüse nach den Ansprüchen 1 bis 5, dadurch gekennzeichnet, daß im unteren Drittel des Ausziehteils (7) ein zwischen 0,25 und 0,4 des Umgebungsdrucks vor dem Einlauf (6) der Ziehdüse betragender Solldruck vorgegeben wird, der Druck zumindest periodisch gemessen wird und bei Abweichungen des gemessenen Drucks vom Solldruck die Treibstrahlgeschwindigkeit oder der Abstand zwischen Schmelzetiegel (1) und Ziehdüse (2) derart verändert wird, daß der Solldruck wieder Hergestellt wird.
7. Steinwolle- oder Glasfasern mit einer mittleren Faserdicke von 3 bis 6 μ und einer Standardabweichung der Faserdicke von weniger als 2,5 μ erhältlich nach dem Verfahren gemäß Anspruch 6.

**Claims**

1. Drawing nozzle for the division of melts according to the nozzle blasting process, consisting of a nozzle inlet (6), propulsion jets (8) entering the drawing nozzle below the nozzle inlet (6) and a slightly divergent drawing-out part (7), having the following features :

a) The contour (16) of the nozzle inlet (6) from the upper edge of the nozzle A passes initially at a radius R, which is between the radii $R_1 = 25\%$ and $R_2 = 40\%$ of the narrowest cross-sectional dimension d of the drawing nozzle and then runs parallel to, or divergently by up to 2° in relation to, the drawing nozzle axis or the central plane of the drawing nozzle up to a depth below the upper edge of the drawing nozzle which is not greater than the narrowest cross-sectional dimension d of the drawing nozzle ;

b) the nozzle inlet (6) is immediately adjoined by the drawing-out part (7), the upper cross-sectional dimension of which is 1.5 to 2.4 times as wide as the narrowest cross-sectional dimension d of the drawing nozzle;

c) the drawing out part widens over a length of at least 6 times the narrowest cross-sectional dimension d of the drawing nozzle with a widening angle of 1 to 2.4° and,

d) in the intermediate cross section between the lower edge of the nozzle inlet (6) and the upper edge of the drawing-out part (7), there are provided propulsion jet nozzles (18), the axis of which is inclined by between 5 and –2° in relation to the drawing nozzle axis or the central plane of the drawing nozzle.

2. Drawing nozzle according to claim 1, characterised in that the propulsion jet nozzles (18) are designed as Laval nozzles.

3. Drawing nozzle according to one of claims 1 or 2, characterised in that the drawing nozzle is designed in the shape of a slit and, in the direction of the slit-shaped extension consists of segments (2a, 2b, 2c, 2d) which are sealed with respect to each other and the width of which in the direction of the slit-shaped extension is not greater than 10 times the narrowest cross-sectional dimension d.

4. Drawing nozzle according to one of claims 1 to 3, characterised in that gas nozzles (20) are provided in the converging part of the drawing nozzle inlet (6), the principal direction component of the axis of the nozzles being directed perpendicularly to the central plane of the drawing nozzle.

5. Drawing nozzle according to claim 3, characterised in that means (32, 40, 41, 42, 43) are provided to adjust the height of the segments (2a, 2b, 2c, 2d) with respect to one another.

6. Process for the operation of the drawing nozzle according to claims 1 to 5, characterised in that a desired pressure of between 0.25 and 0.4 of the ambient pressure upstream of the inlet (6) of the drawing nozzle is predetermined in the lower third of the drawing-out part (7), the pressure is measured at least periodically and, if the pressure which has been measured deviates from the desired pressure, the propulsion-jet speed or the distance between the melting crucible (1) and the drawing nozzle (2) are changed such that the desired pressure is reproduced.

7. Rock wool or glass fibres having an average fibre thickness of 3 to 6 $\mu$ and a standard deviation in the fibre thickness of less than 2.5 $\mu$, obtainable by the process according to claim 6.

**Revendications**

1. Filière d'étirage pour la fragmentation de charges en fusion d'après le procédé de soufflage par filières, comprenant une partie d'admission (6), des jets propulseurs (8) pénétrant dans la filière d'étirage au-dessous de la partie d'admission (6), ainsi qu'une partie d'expulsion (7) à légère divergence, présentant les caractéristiques suivantes :

a) La configuration (16) de la partie d'admission (6) à partir de l'arête supérieure A de la filière s'étend tout d'abord selon un rayon R qui se situe entre les rayons $R_1 = 25\%$ et $R_2 = 40\%$ de la cote $\underline{d}$ la plus étroite de la section de ladite filière, puis parallèlement ou selon une divergence atteignant jusqu'à 2° par rapport à l'axe ou au plan médian de ladite filière jusqu'à une profondeur, au-dessous de l'arête supérieure de cette filière, qui n'excède pas la cote $\underline{d}$ la plus étroite de la section de cette filière d'étirage ;

b) la partie d'expulsion (7), se raccordant à la partie d'admission (6), possède une cote supérieure de section dont la largeur représente de 1,5 à 2,4 fois celle de la cote $\underline{d}$ la plus étroite de la section de la filière ;

c) la partie d'expulsion s'élargit sur une longueur représentant au moins le sextuple de la cote $\underline{d}$ la plus étroite de la section de la filière, avec un angle d'élargissement de 1 à 2,4° et

d) des buses (18) à jets propulseurs sont prévues dans la section intermédiaire entre l'arête inférieure de la partie d'admission (6) et l'arête supérieure de la partie d'expulsion (7), l'axe de ces buses ayant une inclinaison comprise entre 5 et –2° par rapport à l'axe ou au plan médian de la filière d'étirage.

2. Filière d'étirage selon la revendication 1, caractérisée par le fait que les buses (18) à jets propulseurs sont réalisées sous la forme de tuyères de Laval.

3. Filière d'étirage selon l'une des revendications 1 ou 2, caractérisée par le fait que cette filière d'étirage est réalisée en forme de fente et se compose, dans la direction de l'étendue de sa configuration fendue, de tronçons (2a, 2b, 2c, 2d) qui sont cloisonnés les uns par rapport aux autres et dont la largeur, dans la direction de l'étendue à configuration fendue, n'excède pas le décuple de la cote d la plus étroite de la section.

4. Filière d'étirage selon l'une des revendications 1 à 3, caractérisée par le fait que des buses (20) à gaz sont prévues dans la région convergente de la partie d'admission (6) de cette filière, la composante de direction principale de l'axe de ces buses étant orientée perpendiculairement au plan médian de la filière.

5. Filière d'étirage selon la revendication 3, caractérisée par le fait que des moyens (32, 40, 41, 42, 43) sont prévus pour régler les tronçons (2a, 2b, 2c, 2d) en hauteur les uns par rapport aux autres.

6. Procédé d'exploitation de la filière d'étirage selon les revendications 1 à 5, caractérisé par le fait qu'une pression de consigne, représentant entre 0,25 et 0,4 de la pression environnante régnant devant la partie d'admission (6) de la filière d'étirage, est prédéterminée dans le tiers inférieur de la partie d'expulsion (7), la pression étant mesurée au moins périodiquement et la vitesse des jets propulseurs ou la distance entre le creuset de fusion et la filière étant modifiée, lorsque la pression mesurée accuse des écarts par rapport à la pression de consigne, de telle sorte que cette pression de consigne soit rétablie.

7. Fibres de laine minérale ou de verre ayant une épaisseur moyenne de 3 à 6 μ et un écart type d'épaisseur inférieur à 2,5 μ, pouvant être obtenues d'après le procédé selon la revendication 6.

FIG. 1a

FIG. 1b

FIG. 2

FIG. 3

FIG. 4

EP 0 119 429 B2

FIG. 5

FIG. 6

FIG. 7

FIG. 8

FIG. 9

EP 0 119 429 B2

FIG. 10

a)

31  30

b)

31  30

c)

38
31
32  30

d)

34  33  9
18
16
18a
35  17

FIG. 11

a)

b)

c)

d)

FIG. 12

20

EP 0 119 429 B2